# DEMANDE DE BREVET EUROPEEN

(11) **EP 1 122 497 A1**
(43) Date de publication de la demande: **08.08.2001**
(21) Numéro de dépôt: 01400159.8
(22) Date de dépôt: 19.01.2001
(51) Int. Cl.: F23M 5/02, F23D 14/22, F23D 14/32

(54) **Brûleur aéro-oxy-gaz à flamme stabilisée, et bloc-ouvreau équipé d'un tel brûleur**

(30) Priorité: 01.02.2000 FR 0001250
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Legiret, Thierry, c/o L'Air Liquide, 75321 Paris, Cedex 07 (FR); Le Gouefflec, Gérard, c/L'air Liquide, 75321 Paris, Cedex 07 (FR); Arnoux, Stéphane, c/o L?Air Liquide, 75321 Paris, Cedex 07 (FR); Borissoff, Thierry, c/o L'Air Liquide, 75321 Paris, Cedex 07 (FR); Robillard, Dominique, c/o L'Air Liquide, 75321 Paris, Cedex 07 (FR)
(74) Mandataire: Vesin, Jacques

(57) **Abrégé**

L'invention est un brûleur comprenant une canne (1) ayant une région d'extrémité libre adaptée pour être logée dans un ouvreau (2) de four; la canne comporte un ou plusieurs conduits (7) d'amenée de combustible entourés sur une partie de leur longueur par une chemise (10) délimitant un canal (11) d'amenée de comburant, fixée à une bride (12). Une enveloppe (13) est disposée autour d'au moins une partie de la longueur de la région d'extrémité pour être elle-même logée dans l'ouvreau (2) et définir un canal d'amenée d'un deuxième comburant entre elle et la paroi interne de l'ouvreau (2) ; l'enveloppe (13) est fixée à une bride (14) de solidarisation à l'ouvreau, et la bride (12) de la chemise est fixée à celle de l'enveloppe.

Utilisation : fours industriels notamment de fusion de matériaux non-ferreux, de réchauffage, ou de recuit.

## Description

La présente invention concerne les brûleurs aéro-oxy-gaz destinés à équiper des fours industriels, notamment des fours de fusion par exemple de métaux non ferreux (aluminium, cuivre, plomb, etc.), des fours de réchauffage ou de recuit, ou encore destinés au préchauffage de poches, et de manière générale des brûleurs destinés à des applications de fusion ou de chauffe dites « à basse température », c'est-à-dire, dans ces techniques, à une température comprise dans une gamme s'étendant environ de 500° C à 1500° C.

Elle concerne également les blocs-ouvreaux équipés d'un tel brûleur.

L'obtention d'un chauffage optimal, régulier et économique, nécessite la formation d'une flamme stable. Il est également nécessaire de réduire l'émission des oxydes d'azote, extrêmement nocifs.

On connaît déjà des techniques visant à stabiliser la flamme en fonctionnement « aéro », ou/et à réduire les émissions d'oxydes d'azote.

Par exemple, le document EP 0 644 374, qui préconise la mise en rotation de l'air insufflé, décrit un assemblage complexe de pièces mécaniques métalliques dont le travail dans la gamme de températures indiquée plus haut entraîne une usure relativement rapide, nécessitant le remplacement périodique des pièces usées.

Le document EP 0 757 205 préconise l'injection d'un jet d'air selon un angle éloignant ce jet de la première zone de combustion oxygène et gaz, et créant ainsi une zone de recirculation dans un bloc réfractaire ; le fait que le jet d'air soit amené à s'éloigner du jet d'oxygène n'est de manière générale pas de nature à faciliter l'obtention d'une flamme stable ; en outre, il paraît difficile de faire fonctionner un brûleur ainsi équipé, au choix, en mode oxy-gaz ou en mode air-gaz.

Le document US 4 797 087 préconise un étagement de la combustion, à savoir la création d'un premier mélange riche en combustible puis l'injection d'un second oxydant dans une deuxième zone de mélange. Cependant, la gamme des températures de travail est nettement supérieure à celle visée par l'invention, et l'objet de ce document ne semble pas se prêter à un fonctionnement purement oxy-gaz.

L'invention a pour but de remédier aux inconvénients des techniques connues et de créer un brûleur aéro-oxy-gaz produisant une flamme stable, de structure simple, fiable, présentant des dimensions réduites, et susceptible de travailler au choix soit en mode oxy-gaz soit en mode pratiquement tout air-gaz.

A cette fin, l'invention concerne un brûleur aéro-oxy-gaz comprenant une canne ayant une région d'extrémité libre adaptée pour être logée dans un ouvreau d'un four industriel, cette canne comportant au moins un conduit d'amenée de combustible et une chemise entourant le ou les conduits sur une partie de leur longueur pour délimiter entre elle et ce ou ces conduits un canal d'amenée de comburant, cette chemise étant fixée à une bride s'étendant transversalement autour d'elle, caractérisé en ce qu'une enveloppe est disposée autour d'au moins une partie de la longueur de la région d'extrémité libre de la canne pour être elle-même logée dans l'ouvreau et définir un canal d'amenée d'un deuxième comburant entre l'enveloppe et la surface intérieure de l'ouvreau, cette enveloppe étant fixée à une bride de solidarisation à l'ouvreau s'étendant transversalement autour d'elle, et la bride de la chemise étant fixée à la bride de l'enveloppe.

Grâce à cette structure, on obtient un brûleur aéro-oxy-gaz de fabrication simple, peu encombrant, et facile à mettre en place.

Le brûleur peut en outre posséder une ou plusieurs des caractéristiques suivantes :
- chaque conduit d'amenée de combustible comprend un injecteur équipant une extrémité libre d'un tuyau rigide, et dont la propre extrémité libre constitue celle du conduit ;
- l'enveloppe est ajustée autour de la chemise ;
- l'enveloppe s'étend au-delà de la chemise, approximativement jusqu'au droit de l'extrémité libre du ou des conduits d'amenée de combustible, pour déterminer entre elle et les conduits, un canal d'amenée d'oxygène s'étendant jusqu'à cette extrémité libre ;
- l'enveloppe présente une section plus faible que celle de la chemise à partir d'une région située un peu au-delà de l'extrémité libre de celle-ci ;
- la bride de l'enveloppe porte des goujons pour la fixation de la bride de la chemise ;
- la canne comporte un axe longitudinal par rapport auquel la chemise est décentrée pour dégager entre elle et le ou les conduits d'amenée de combustible, d'un côté, un espace plus large pour recevoir un tube d'un dispositif de contrôle de flamme et un brûleur pilote ;
- la chemise présente une partie de forme évasée, et, dans cette partie évasée, débouche une extrémité d'un tube d'amenée d'oxygène ;
- la bride de l'enveloppe comporte une ouverture dans laquelle débouche une extrémité d'un tube d'amenée du deuxième comburant ;
- la vitesse du combustible dans le ou les conduits d'amenée de combustible est comprise dans une gamme environ de 10 m/s à 180 m/s ;
- ledit canal d'amenée du comburant est parcouru par de l'oxygène à une vitesse au plus égale à 20 m/s environ et de préférence égale à 8 m/s environ ; et
- le ou les conduits d'amenée de combustible sont parcourus par du gaz naturel avec un débit total de 50 Nm³/h environ et une vitesse de 30 m/s environ, et ledit canal d'amenée de comburant est parcouru par de l'oxygène avec un débit de 100 Nm³/h environ et une vitesse de 8,5 m/s environ.

L'invention concerne également un bloc-ouvreau équipé d'un brûleur tel que défini ci-dessus, caractérisé en ce qu'il comporte un ouvreau le traversant de part en part et présentant une chambre d'entrée et une chambre de sortie reliées par une zone de transition évasée en direction de la chambre d'entrée, et le ou les conduits d'amenée de combustible de la canne du brûleur pénètrent, depuis la chambre d'entrée, jusque dans la chambre de sortie.

Le bloc-ouvreau peut aussi posséder une ou plusieurs des caractéristiques suivantes :
- dans le cas où la chambre de sortie est approximativement cylindrique, la distance L entre l'extrémité libre des conduits d'amenée de combustible et l'extrémité de l'ouvreau située côté intérieur du four, et le diamètre d de la chambre de sortie, vérifient la relation 0,3 d ⇔ L ⇔ 1,8 d.
- la chambre d'entrée est décentrée par rapport à un axe longitudinal de la canne et par rapport à la chambre de sortie et la zone de transition, pour dégager entre la surface intérieure de l'ouvreau et l'enveloppe un espace plus large permettant l'introduction du deuxième comburant ;
- ledit canal d'amenée de comburant est adapté pour être parcouru par un courant d'oxygène, ledit canal d'amenée d'un deuxième comburant est adapté pour être parcouru par un courant d'air, et le ou les conduits d'amenée de combustible sont adaptés pour être parcourus par un courant de gaz naturel ;
- ledit canal d'amenée de comburant est parcouru par de l'oxygène avec un débit compris dans une gamme allant environ de 1% à 5% du débit total d'oxygène, d'air et de combustible ;
- ledit canal d'amenée d'un deuxième comburant est parcouru par de l'air avec une vitesse au plus égale à 50 m/s environ et de préférence égale à 30 m/s environ ;
- le ou les conduits d'amenée de combustible sont parcourus par du gaz naturel avec un débit total de 50 Nm³/h environ et une vitesse de 30 m/s environ, ledit canal d'amenée de comburant est parcouru par de l'oxygène avec un débit de 50 Nm³/h environ et une vitesse de 4,25 m/s environ, et ledit canal d'amenée d'un deuxième comburant est parcouru par de l'air avec un débit de 250 Nm³/h environ et une vitesse de 13,4 m/s environ ; et
- le ou les conduits d'amenée de combustible sont parcourus par du gaz naturel avec un débit total de 50 Nm³/h environ et une vitesse de 30 m/s environ, ledit canal d'amenée de comburant est parcouru par de l'oxygène avec un débit de 15 Nm³/h environ et une vitesse de 1,3 m/s environ, et ledit canal d'amenée d'un deuxième comburant est parcouru par de l'air avec un débit de 427 Nm³/h environ et une vitesse de 23 m/s environ.

Grâce à ces caractéristiques, on peut obtenir en outre une flamme d'une grande stabilité.

D'autres caractéristiques et avantages de l'invention ressortiront de la description qui va suivre, d'une forme de réalisation de l'invention donnée à titre d'exemple non limitatif, représentée sur les dessins joints dans lesquels :
- la figure 1 est une vue de dessus partiellement coupée selon la ligne I-I de la figure 2, d'une forme de réalisation de l'invention, sur laquelle certains éléments visibles sur la figure 2 n'ont pas été représentés pour ne pas surcharger le dessin, et
- la figure 2 est une coupe longitudinale selon la ligne Il-Il de la figure 1, d'une forme de réalisation de l'invention, sur laquelle certains éléments visibles sur la figure 1 n'ont pas été représentés pour ne pas surcharger le dessin.

Le brûleur illustré par les figures est un brûleur aéro-oxy-gaz comportant une canne 1 dont une région d'extrémité libre est logée dans un ouvreau 2 creusé dans un bloc-ouvreau 3 s'étendant dans un mur extérieur d'un four industriel et traversant ce bloc 3 de part en part.

L'ouvreau présente, de l'intérieur vers l'extérieur du four, trois zones principales: une chambre de sortie 4 (ici cylindrique) présentant par exemple une longueur d'une vingtaine de centimètres et une hauteur (ici un diamètre) d'une dizaine de centimètres, une zone 5 évasée en direction de l'extérieur du four (ici tronconique), d'une longueur d'une dizaine de centimètres, et une chambre d'entrée 6 reliée par la zone évasée à la chambre de sortie, d'une longueur d'une dizaine de centimètres, et dont la géométrie sera précisée dans la suite.

De manière connue, la chambre de sortie 4 de l'ouvreau débouche dans le four par un court évasement de forme arrondie ; le petit diamètre de la zone évasée est approximativement égal au diamètre de la chambre de sortie.

La canne 1 comporte un ou plusieurs (ici trois) conduits 7 d'amenée de combustible, par exemple de gaz naturel. Ces conduits d'amenée sont constitués par des tuyaux rigides 8 dont l'extrémité libre est équipée d'une buse ou d'un injecteur 9 ; les trois conduits 7 sont répartis autour d'un axe longitudinal de la canne, en section transversale, à 120°. Ils pénètrent dans l'ouvreau, depuis la chambre d'entrée 6 jusque dans la chambre de sortie 4, à une profondeur ici légèrement supérieure à une vingtaine de centimètres si le bloc 3 est épais d'une quarantaine de centimètres. Des compléments d'information à cet égard seront donnés dans la suite.

La canne 1 comprend également une chemise métallique ou collerette 10 entourant les conduits 7 d'amenée de combustible sur une partie de leur longueur pour déterminer, entre elle et les conduits, un canal 11 d'amenée d'oxygène pour amener dans l'ouvreau l'oxygène constituant le comburant du brûleur. A cette chemise 10, est fixée une bride 12 s'étendant transversalement autour d'elle. Dans le cas de brûleurs connus oxy-gaz, la chemise 10 pénètre dans la chambre d'entrée sur une profondeur de quelques centimètres seulement, et sa bride 12 est fixée au bloc-ouvreau 3 du four dans la zone de celui-ci entourant l'ouvreau 2 par exemple au moyen de goujons dont une extrémité est noyée dans le bloc et dont une partie filetée en saillie à l'extérieur, traversant la bride, est adaptée pour recevoir au moins un écrou. Au-delà de la chemise en direction de l'intérieur du four, le canal d'amenée d'oxygène est alors déterminé entre la surface intérieure de l'ouvreau et les conduits 7.

En revanche, ici, autour de la chemise 10, est ajustée une enveloppe 13 métallique s'étendant en direction de l'intérieur du four au-delà de la chemise, ici jusqu'à approximativement au droit de l'extrémité libre des conduits 7, de sorte que jusqu'à cette extrémité libre, le canal d'amenée d'oxygène est déterminé entre l'enveloppe 13 et les conduits ; l'enveloppe 13 présente une section plus faible que celle de la chemise 10 à partir d'une région située un peu au-delà de l'extrémité libre de celle-ci située dans la chambre d'entrée. Les dimensions en section transversale de l'ouvreau 2 étant supérieures à celles de l'enveloppe 13 sur toute la longueur de celle-ci, un canal supplémentaire est déterminé entre la surface intérieure de l'ouvreau et l'enveloppe. Ce canal est mis en oeuvre pour amener un deuxième comburant, à savoir de l'air, dans la chambre de sortie de l'ouvreau. A l'enveloppe 13, est fixée une bride 14 s'étendant transversalement autour d'elle. En effet, ici, ce n'est pas la bride 12 de la chemise qui est fixée au bloc 3 dans la zone de celui-ci entourant l'ouvreau, mais la bride 14 de l'enveloppe constituant la cloison entre le canal d'amenée d'oxygène et le canal d'amenée d'air. La bride 14 de l'enveloppe est donc fixée au bloc par exemple au moyen de goujons 15 dont une extrémité est noyée dans le bloc 3 et dont une partie filetée en saillie à l'extérieur, traversant cette bride, est adaptée pour recevoir au moins un écrou. La bride de l'enveloppe 13 porte elle-même des goujons 16 dont une partie filetée en saillie vers l'extérieur traverse la bride 12 de la chemise pour recevoir au moins un écrou; de manière à solidariser les deux brides 12, 14. Des joints peuvent être interposés respectivement entre le bloc 3 et la bride 14 de l'enveloppe, et entre la bride 14 de l'enveloppe et la bride 12 de la chemise.

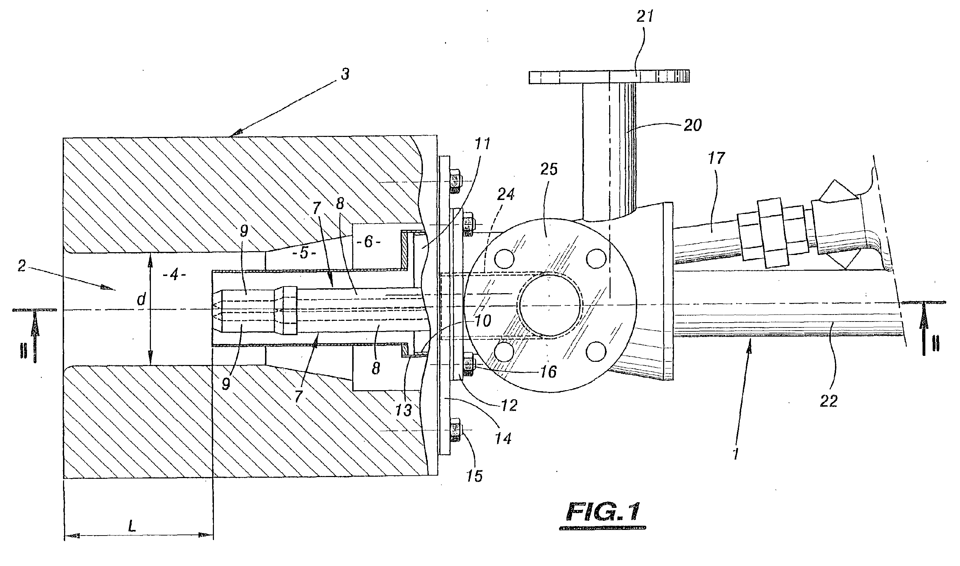

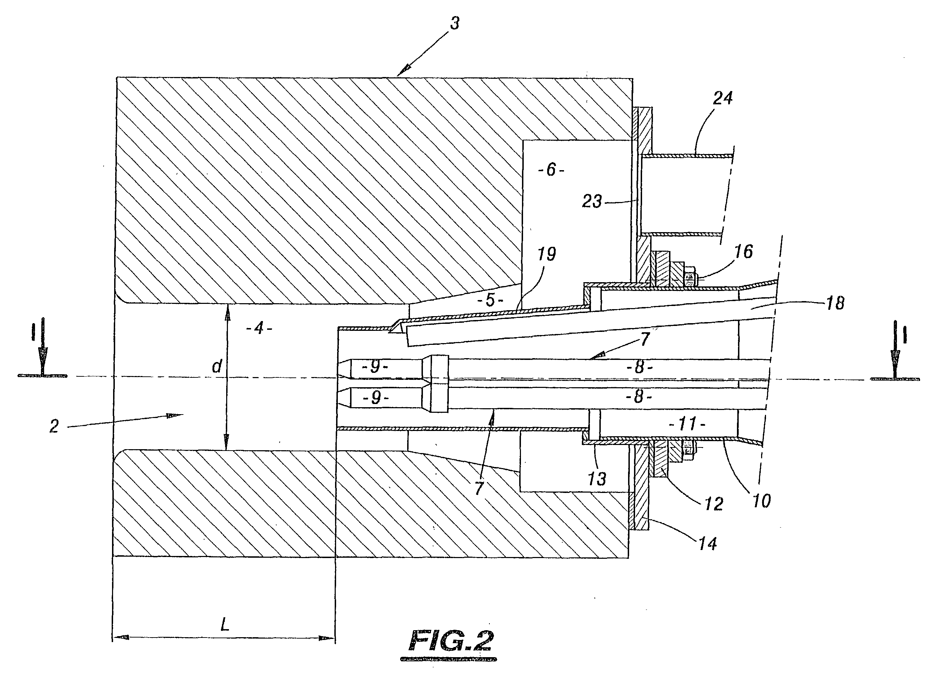

Comme on peut le voir sur les figures, l'axe longitudinal de la canne 1 défini plus haut comme étant l'axe autour duquel sont répartis les conduits 7 d'amenée de combustible est centré dans la chambre de sortie 4 et dans la zone évasée 5 de transition entre la chambre de sortie 4 et la chambre d'entrée 6 de l'ouvreau, mais la chemise 10 est décentrée par rapport à cet axe pour dégager entre elle et les conduits d'amenée de combustible, d'un côté, un espace plus large dans lequel s'étendent d'une part un tube 17 appartenant à un dispositif de contrôle de la flamme permettant un contrôle depuis l'extérieur du four, visible sur la figure 1 mais qui n'est pas représenté sur la figure 2, et d'autre part un brûleur pilote 18 dont l'extrémité libre débouche à proximité de celle des conduits 7 d'amenée de combustible, visible sur la figure 2 mais qui n'est pas représenté sur la figure 1 ; l'enveloppe 13 comporte un évidement 19 convergeant vers l'axe longitudinal de la canne en direction de l'intérieur du four pour livrer passage au brûleur pilote 18 et loger celui-ci. A l'extérieur du bloc 3, la chemise présente une partie de forme évasée en direction opposée au bloc, et, dans cette partie évasée, du côté de l'espace plus large dégagé par le décentrage, débouche une extrémité d'un tube 20 d'amenée d'oxygène dont l'extrémité opposée est munie d'une bride 21 de fixation pour une bride correspondante d'une conduite d'alimentation en oxygène; le tube 20 s'étend, à l'extérieur de la chemise 10, approximativement perpendiculairement à l'axe longitudinal de la canne. Les conduits 7 d'amenée de combustible sont raccordés, à l'intérieur de la chemise 10, à un tube 22 d'amenée de combustible s'étendant le long de et centré sur l'axe longitudinal de la canne et destiné à être lui-même raccordé à une conduite d'alimentation en combustible.

La chambre d'entrée 6 de l'ouvreau est elle-même décentrée par rapport à l'axe longitudinal de la canne 1 et ainsi par rapport à la chambre de sortie 4 et la zone de transition 5 pour dégager entre la surface intérieure de l'ouvreau et l'enveloppe 13 un espace plus large pour permettre l'introduction de l'air. A cet fin, la bride 14 de l'enveloppe comporte, dans sa région recouvrant cet espace plus large, une ouverture 23 dans laquelle débouche une extrémité d'un tube 24 d'amenée d'air, dont seul un court tronçon est représenté sur la figure 2 ; ce tube 24 est coudé à angle droit et son extrémité opposée est munie d'une bride 25 de fixation pour une bride correspondante d'une conduite d'alimentation en air.

Ce brûleur selon l'invention, qui résulte de l'ajout à un brûleur oxy-gaz connu, d'une partie « aéro » que l'on loge dans le bloc-ouvreau 2 et qui comporte une enveloppe 13 métallique et une bride 14 de fixation à ce bloc, la bride 12 de la collerette 10 du brûleur connu étant elle-même fixée à celle de l'enveloppe 13, offre diverses possibilités pour stabiliser la flamme.

Une première solution consiste à délivrer, en fonctionnement « aéro », un débit d'oxygène compris dans une gamme environ de 1% à 5% du débit total parvenant dans la chambre de sortie de l'ouvreau, de préférence environ 3%.

Une autre solution consiste à disposer l'extrémité libre des conduits 7 d'amenée de combustible, ici celle des injecteurs 9, relativement près de l'extrémité de l'ouvreau 2 située côté intérieur du four. Lorsque la chambre de sortie 4 est approximativement cylindrique, si L est la distance entre cette extrémité libre et cette extrémité de l'ouvreau, et d est le diamètre de la chambre de sortie de l'ouvreau, on estime que cette condition est remplie si 0,3 d ⇔ L ⇔ 1,8 d.

La vitesse du combustible, par exemple du gaz naturel, est comprise environ dans la gamme de 10 m/s à 180 m/s, en fonction de la puissance maximale désirée.

La vitesse de l'oxygène est au plus égale à 20 m/s environ, de préférence 8 m/s environ.

La vitesse de l'air est au plus égale à 50 m/s environ, de préférence 30 m/s environ.

Il n'est dans ces conditions pas nécessaire de mettre l'air en rotation ou d'insuffler des jets d'air divergents. Beaucoup plus simplement, l'invention permet de créer une flamme à partir d'un combustible et d'un ou deux comburants que l'on injecte dans la même direction, ici plus précisément coaxialement.

Les dessins correspondent à un brûleur ayant une puissance unitaire de l'ordre de 500 kW grâce à la combustion de 50 Nm³/h environ de gaz naturel, avec soit 100 Nm³/h environ d'oxygène, soit un maximum de 500 Nm³/h environ d'air et en option un débit d'oxygène pur compris dans une gamme environ de 2% à 5%.

Différents exemples de fonctionnement de ce brûleur sont illustrés par le tableau ci-dessous, pour une puissance de 500 kW, et un débit de gaz naturel de 50 Nm³/h à une vitesse de 30 m/s.

| | **Débit d'air Nm**^{**3**}**/h** | **Débit d'oxygène Nm**^{**3**}**/h** | **Vitesse de l'air m/s** | **Vitesse de l'oxygène m/s** |
|---|---|---|---|---|
| **Tout oxygène** | 0 | 100 | 0 | 8,5 |
| **Mixte** | 250 | 50 | 13,4 | 4,25 |
| **(presque) tout air** | 427 | 15 | 23 | 1,3 |

Bien entendu, l'invention n'est pas limitée aux formes de réalisation ci-dessus décrites et représentées, et on pourra en prévoir d'autres sans sortir de son cadre.

## Revendications

1. Brûleur aéro-oxy-gaz comprenant une canne (1) ayant une région d'extrémité libre adaptée pour être logée dans un ouvreau (2) d'un four industriel, cette canne comportant au moins un conduit (7) d'amenée de combustible et une chemise (10) entourant le ou les conduits (7) sur une partie de leur longueur pour délimiter entre elle et ce ou ces conduits un canal (11) d'amenée de comburant, cette chemise (10) étant fixée à une bride (12) s'étendant transversalement autour d'elle, caractérisé en ce qu'une enveloppe (13) est disposée autour d'au moins une partie de la longueur de la région d'extrémité libre de la canne (1) pour être elle-même logée dans l'ouvreau (2) et définir un canal d'amenée d'un deuxième comburant entre l'enveloppe (13) et la surface intérieure de l'ouvreau (2), cette enveloppe (13) étant fixée à une bride (14) de solidarisation à l'ouvreau (2) s'étendant transversalement autour d'elle, et la bride (12) de la chemise étant fixée à la bride (14) de l'enveloppe.

2. Brûleur selon la revendication 1, caractérisé en ce que chaque conduit (7) d'amenée de combustible comprend un injecteur (9) équipant une extrémité libre d'un tuyau rigide (8), et dont la propre extrémité libre constitue celle du conduit.

3. Brûleur selon l'une quelconque des revendications 1 et 2, caractérisé en ce que l'enveloppe (13) est ajustée autour de la chemise (10).

4. Brûleur selon l'une quelconque des revendications 1 à 3, caractérisé en ce que l'enveloppe (13) s'étend au-delà de la chemise (10), approximativement jusqu'au droit de l'extrémité libre du ou des conduits (7) d'amenée de combustible, pour déterminer entre elle et les conduits, un canal d'amenée d'oxygène s'étendant jusqu'à cette extrémité libre.

5. Brûleur selon l'une quelconque des revendications 1 à 4, caractérisé en ce que l'enveloppe (13) présente une section plus faible que celle de la chemise (10) à partir d'une région située un peu au-delà de l'extrémité libre de celle-ci.

6. Brûleur selon l'une quelconque des revendications 1 à 5, caractérisé en ce que la bride (14) de l'enveloppe porte des goujons (16) pour la fixation de la bride (12) de la chemise.

7. Brûleur selon l'une quelconque des revendications 1 à 6, caractérisé en ce que la canne (1) comporte un axe longitudinal par rapport auquel la chemise (10) est décentrée pour dégager entre elle et le ou les conduits (7) d'amenée de combustible, d'un côté, un espace plus large pour recevoir un tube (17) d'un dispositif de contrôle de flamme et un brûleur pilote (18).

8. Brûleur selon l'une quelconque des revendications 1 à 7, caractérisé en ce que la chemise (10) présente une partie de forme évasée, et, dans cette partie évasée, débouche une extrémité d'un tube (20) d'amenée d'oxygène.

9. Brûleur selon l'une quelconque des revendications 1 à 8, caractérisé en ce que la bride (14) de l'enveloppe (13) comporte une ouverture (23) dans laquelle débouche une extrémité d'un tube (24) d'amenée du deuxième comburant.

10. Brûleur selon l'une quelconque des revendications 1 à 9, caractérisé en ce que la vitesse du combustible dans le ou les conduits (17) d'amenée de combustible est comprise dans une gamme environ de 10 m/s à 180 m/s.

11. Brûleur selon l'une quelconque des revendications 1 à 10, caractérisé en ce que ledit canal d'amenée du comburant est parcouru par de l'oxygène à une vitesse au plus égale à 20 m/s environ et de préférence égale à 8 m/s environ.

12. Brûleur selon l'une quelconque des revendications 1 à 11, caractérisé en ce que le ou les conduits (7) d'amenée de combustible sont parcourus par du gaz naturel avec un débit total de 50 Nm³/h environ et une vitesse de 30 m/s environ, et ledit canal d'amenée de comburant est parcouru par de l'oxygène avec un débit de 100 Nm³/h environ et une vitesse de 8,5 m/s environ.

13. Bloc-ouvreau équipé d'un brûleur selon l'une quelconque des revendications 1 à 12, caractérisé en ce qu'il comporte un ouvreau (2) le traversant de part en part et présentant une chambre d'entrée (6) et une chambre de sortie (4) reliées par une zone de transition (5) évasée en direction de la chambre d'entrée, et le ou les conduits (7) d'amenée de combustible de la canne (1) du brûleur pénètrent, depuis la chambre d'entrée, jusque dans la chambre de sortie.

14. Bloc-ouvreau selon la revendication 13, caractérisé en ce que, dans le cas où la chambre de sortie (4) est approximativement cylindrique, la distance L entre l'extrémité libre des conduits (7) d'amenée de combustible et l'extrémité de l'ouvreau située côté intérieur du four, et le diamètre d de la chambre de sortie (4), vérifient la relation 0,3 d ⇔ L ⇔ 1,8 d.

15. Bloc-ouvreau selon l'une quelconque des revendications 13 et 14, caractérisé en ce que la chambre d'entrée (6) est décentrée par rapport à un axe longitudinal de la canne (1) et par rapport à la chambre de sortie (4) et la zone de transition (5), pour dégager entre la surface intérieure de l'ouvreau (2) et l'enveloppe (13) un espace plus large permettant l'introduction du deuxième comburant.

16. Bloc-ouvreau selon l'une quelconque des revendications 13 à 15, caractérisé en ce que ledit canal d'amenée de comburant est adapté pour être parcouru par un courant d'oxygène, ledit canal d'amenée d'un deuxième comburant est adapté pour être parcouru par un courant d'air, et le ou les conduits (7) d'amenée de combustible sont adaptés pour être parcourus par un courant de gaz naturel.

17. Bloc-ouvreau selon l'une quelconque des revendications 13 à 16 équipé d'un brûleur selon l'une quelconque des revendications 1 à 11, caractérisé en ce que ledit canal d'amenée de comburant est parcouru par de l'oxygène avec un débit compris dans une gamme allant environ de 1% à 5% du débit total d'oxygène, d'air et de combustible.

18. Bloc-ouvreau selon l'une quelconque des revendications 13 à 17, caractérisé en ce que ledit canal d'amenée d'un deuxième comburant est parcouru par de l'air avec une vitesse au plus égale à 50 m/s environ et de préférence égale à 30 m/s environ.

19. Bloc-ouvreau selon l'une quelconque des revendications 13 à 16 équipé d'un brûleur selon l'une quelconque des revendications 1 à 11, caractérisé en ce que le ou les conduits (7) d'amenée de combustible sont parcourus par du gaz naturel avec un débit total de 50 Nm³/h environ et une vitesse de 30 m/s environ, ledit canal d'amenée de comburant est parcouru par de l'oxygène avec un débit de 50 Nm³/h environ et une vitesse de 4,25 m/s environ, et ledit canal d'amenée d'un deuxième comburant est parcouru par de l'air avec un débit de 250 Nm³/h environ et une vitesse de 13,4 m/s environ.

20. Bloc-ouvreau selon l'une quelconque des revendications 13 à 18 équipé d'un brûleur selon l'une quelconque des revendications 1 à 11, caractérisé en ce que le ou les conduits (7) d'amenée de combustible sont parcourus par du gaz naturel avec un débit total de 50 Nm³/h environ et une vitesse de 30 m/s environ, ledit canal d'amenée de comburant est parcouru par de l'oxygène avec un débit de 15 Nm³/h environ et une vitesse de 1,3 m/s environ, et ledit canal d'amenée d'un deuxième comburant est parcouru par de l'air avec un débit de 427 Nm³/h environ et une vitesse de 23 m/s environ.
